# EUROPEAN PATENT SPECIFICATION

(11) **EP 3 235 559 B1**
(45) Date of publication and mention of the grant of the patent: **06.08.2025**
(21) Application number: 15870181.3
(22) Date of filing: 01.10.2015
(51) Int. Cl.: B01D 71/02, B01D 69/02, B01D 67/00

(54) **BINDER-COUPLED CARBON NANOSTRUCTURE NANO-POROUS MEMBRANE AND MANUFACTURING METHOD THEREFOR**
BINDERGEKOPPELTE NANOPORÖSE KOHLENSTOFFNANOSTRUKTURMEMBRAN UND HERSTELLUNGSVERFAHREN DAFÜR
MEMBRANE NANOPOREUSE DE NANOSTRUCTURE DE CARBONE COUPLÉE À UN LIANT ET SON PROCÉDÉ DE FABRICATION

(30) Priority: 19.12.2014 KR 20140184664
(43) Date of publication of application: 25.10.2017
(73) Proprietor: Bioneer Corporation, Daejeon 34302 (KR)
(72) Inventor: PARK, Han Oh, Daejeon 34049 (KR); KIM, Jae Ha, Daejeon 34169 (KR); KIM, Jun Pyo, Cheongju-si Chungcheongbuk-do 28182 (KR); KIM, Ji Eun, Daejeon 35205 (KR)
(74) Representative: Kraus & Lederer PartGmbB
(86) International application number: PCT/KR2015/010408
(87) International publication number: WO 2016/099013

(56) References cited:
- WO-A1-2007/089119
- WO-A1-2009/021988
- JP-A- 2011 042 538
- KR-A- 20100 116 949
- KR-B1- 100 761 524
- US-A1- 2010 098 877
- US-A1- 2011 217 451
- US-B1- 7 611 628

## Description

### TECHNICAL FIELD

The present disclosure relates to a binder-coupled carbon nanostructure nanoporous membrane and a method for manufacturing the same and more particularly, to a binder-coupled carbon nanostructure nanoporous membrane and a method for manufacturing the same in which a carbon nanostructure is layered on one surface or both surfaces of a porous membrane support having micropores or nanopores, a solution mixing polymer binder with a solvent penetrates into the composite, and the result is calcined to couple the porous membrane support with the carbon nanostructure.

### BACKGROUND ART

As the industry has advanced, separation membrane technologies for obtaining separation ability for high purity can be recognized as a very important field. Such technologies are becoming increasingly important in a wide range of fields, including the chemical industry, food industry, pharmaceutical industry, medical care, biochemistry, and environmental fields. As the demand for clean water and awareness of water shortage particularly increase in the field of environment, the technologies using the separation membrane has attracted much attention as one of the solutions to address the issues.

Generally, the types of separation membranes used vary depending on the characteristics of the target substance. The materials of the separation membrane include, e.g., filter cloth, paper, felt, and sponge as a fiber type. Their values are comparatively cheap, the dust collection effect is good, and thus, the application range is wide. There are various kinds of materials for the filter cloth depending on natural fibers and man-made fibers.

Materials of porous membranes are carbon, metal, plastic, and so on. They have high mechanical strength and thus are used in industrial high pressure filter. In particular, the porous membranes composed of carbon are suitable for filters that must withstand corrosion. Recently, as interest in clean technology using functional materials has increased, researches on filters that purify various air pollutants and water pollutants have been actively conducted. These porous membranes have been developed in various forms in order to filter, e.g., suspended substances, harmful substances, and dusts present in gases or liquids. Among them, filters using active carbon fibers for removing fine dusts and organic adsorbates and metal fiber separation membranes using metal fibers for decomposing pathogens and organic matters have been widely spotlighted.

Separation membranes such as a micro filtration (MF) membrane, an ultrafiltration (UF) membrane, a nano filtration (NF) membrane, a reverse osmosis (RO) membrane, and an ion exchange membrane are used in the water treatment field and mainly used for industrial waste water treatment, water treatment, sewage treatment, wastewater treatment, and seawater desalination. The micro filtration membranes are mainly used in water treatment plants and are also used for sewage treatment by a membrane bio reactor (MBR). The ultrafiltration membrane is used for water treatment applications because of their ability to remove bacteria. The reverse osmosis membrane is used for seawater desalination facilities. The ion exchange membrane is mainly used for desalting processes. At Shizuoka Technology Center, a nano filtration membrane was successfully developed to separate green tea components. Yamamoto Group of Tokyo University has developed a membrane reactor for ultrahigh-water treatment. The ultrahigh water treatment technology is in the process of commercialization.

Meanwhile, carbon nanostructures can be classified into, e.g., carbon nanotubes, carbon nanohorns, and carbon nanofibers depending on the type thereof. In particular, carbon nanotubes can be applied to various fields such as energy, environment, and electronic materials due to their excellent mechanical strength, thermal conductivity, electrical conductivity, and chemical stability.

As an application for such a carbon nanostructure, a carbon nanostructure-metal composite induces a functional group on the carbon nanotube, and a metal (for example, cobalt, copper, nickel, and silver) is reacted with the functional group to be chemically bonded thereto. Due to the metal components contained, they have excellent properties for forming and molding of structures such as a field emission display, a hydrogen storage device combination, an electrode, a super capacitor, an electromagnetic wave shielding structure, and a lightweight high strength application product.

Methods of preparing materials for such carbon nanostructure-metal composites are disclosed in Korean Patent No. 0558966, Korean Patent No. 1095840, Korean Patent No. 1202405, US 7,611,828 B1 and WO 2007/089119 A1.

Further, it is attempted to produce the membranes using carbon nanostructures. Single-walled carbon nanotubes are applicable to renewable hybrid ceramic filters due to narrow diameter, high surface area, thermal resistance, and porous cohesive structure thereof. Recently, it has reported that multi-walled carbon nanotube filters have excellent effects on bacterial removal. Further, it has been known that high-penetrability single-walled carbon nanotube filters are highly efficient at removing bacterial and viral pathogens from water.

Further, the difficulty of adhering carbon nanotubes has been addressed to some extent by directly synthesizing and aligning multi-walled carbon nanotubes on a surface of a universal metal filter for filter applications. The reduction of the metal filter under high temperature hydrogen gas causes to produce the catalyst sites of the nanotube growth so that the carbon nanotubes are aligned to grow. At this time, direct manipulation of filter recovery efficiency and the shape of the carbon nanotubes were possible by controlling the flow rate of the reducing agent in the carbon nanotube synthesis process. However, the technology using the aligned carbon nanotubes is difficult to commercialize, and there are still many technical problems to deal with a large amount of actual pollutants.

Further, typical membrane filters require frequent backwashing, which limits the application of various temperatures when removing impurities, consumes a large amount of energy, and break the membrane or increase the pore size because the membrane itself is not strong. Among these membrane filters, in particular, a porous membrane using the carbon nanostructure is manufactured by layering or coating a material on a support. However, there are problems that the support and the carbon nanostructure film are not bonded, and desorption occurs, and the size of the formed nanoporous membrane is not constant. When the carbon nanotube-metal composite is used, the metal should be melted and bonded to the support. However, when a metal which is not formed of nanoparticles is used, it is not melted after the heat treatment and thus not bonded to the support. Further, even when a metal formed of nanoparticles is used, a phenomenon occurs in which the metal is melted to block all the pores.

As a result, the inventors of the present disclosure have found that a carbon nanostructure is layered on a porous membrane support, a solution containing a polymer binder and a solvent permeates into the composite, and the composite is subjected to a calcining treatment to form a carbon nanostructure-binder coupled nanoporous membrane. They have found that the nanoporous membrane can be applied to a separation membrane, a field emission display, a hydrogen storage device, a supercapacitor, etc., since strong coupling occurs between the support and the carbon nanostructure due to the use of the binder. Thus, they completed the present disclosure.

### SUMMARY OF INVENTION

It is an object of the present disclosure to provide a binder-coupled carbon nanostructure nanoporous membrane and a method for manufacturing the same.

In order to achieve the above object, the present disclosure is to provide a binder-coupled carbon nanostructure nanoporous membrane in accordance with claim 1.

In addition, the present disclosure is to provide a binder-coupled carbon nanostructure nanoporous membrane manufactured by the method.

### BRIEF DESCRIPTION OF THE DRAWINGS

FIG. 1 is a scanning electron microscope (SEM) image of a binder-coupled carbon nanostructure nanoporous membrane when the mixing ratio of the binder and the solvent is 1 : 1 in Example 1.
FIG. 2 shows the results of measurement of the pore sizes and the pore size distribution of the binder-coupled carbon nanostructure nanoporous membrane prepared in Example 1.
FIG. 3 is a scanning electron microscope (SEM) image of a binder-bonded carbon nanostructure nanoporous membrane when the mixing ratio of the binder and the solvent is 1 : 10 in Example 2.
FIG. 4 shows the results of measurement of the pore sizes and the pore size distribution of the binder-coupled carbon nanostructure nanoporous membrane prepared in Example 2.
FIG. 5 is a scanning electron microscope (SEM) image of a binder-bonded carbon nanostructure nanoporous membrane when the mixing ratio of the binder and the solvent is 1 : 20 in Example 3.
FIG. 6 shows the results of measurement of the pore sizes and the pore size distribution of the binder-coupled carbon nanostructure nanoporous membrane prepared in Example 3.
FIG. 7 is a graph showing a binder-coupled carbon nanostructure nanoporous membrane depending on a mixing ratio of the binder and the solvent.
FIG. 8 is a scanning electron microscope (SEM) image of a binder-coupled carbon nanostructure nanoporous membrane when the binder is not coated in Comparative Example 1.
FIG. 9 shows the results of measurement of the pore sizes and the pore size distribution of the binder-coupled carbon nanostructure nanoporous membrane prepared in Comparative Example 1.
FIG. 10 is for testing the bonding strength between a support and the binder-coupled carbon nanostructure nanoporous membrane formed on the support, FIG. 10A is an image showing water permeation of a porous membrane without using a ceramic binder, and FIG. 10B is an image showing water permeation of a binder-coupled carbon nanostructure nanoporous membrane formed by passing through the ceramic binder in 1 : 20 and then calcining the same.

### BEST MODE FOR CARRYING OUT THE INVENTION

Unless defined otherwise, all technical and scientific terms used herein have the same meaning as commonly understood by one of ordinary skill in the art to which the invention pertains. Generally, the nomenclature used herein and the experiment methods, which will be described below, are those well known and commonly employed in the art.

In the present disclosure, a binder-coupled carbon nanostructure nanoporous membrane was prepared by mixing a binder and a solvent at various ratios, and the pore size was measured according to each ratio. As a result, it was confirmed that the size of the pores varied depending on the ratio of the binder and the solvent, and the resulting binder-coupled carbon nanostructure nanoporous membrane can be used as a separation membrane for various applications because of its strong bonding strength between the carbon nanotube porous membrane and the support.

Accordingly, an aspect of the present disclosure relates to a method of preparing a binder-coupled carbon nanostructure nanoporous membrane, consisting of: (a) preparing a suspension consisting of a carbon nanostructure, a first solvent and a surfactant, and then layering the suspension on a porous support thereby preparing a carbon nanostructure layer; (b) washing the prepared carbon nanostructure layer with a solvent and drying the carbon nanostructure layer; (c) preparing a binder solution by mixing a binder and a second solvent, and then preparing a complex porous membrane layer by infiltrating the binder solution into an upper portion of the carbon nanostructure layer; and (d) heat treating the aligned carbon nanostructure and the support layer by heating the layer, wherein viscosity of the binder solution is 50 to 100,000 cP.

According to the present disclosure, the surfactant may be selected from the group consisting of a nonionic surfactant, a cationic surfactant, an anionic surfactant, and a mixture thereof. The surfactant may be, but not limited to, preferably used as one selected from the group consisting of cetyltrimethylammonium bromide, cetyltrimethylammonium chloride, sodium dodecyl sulfate, stearic acid, methyl glucoside, octyl glucoside, polyoxyethylene sorbitan monolaurate, polyoxyethylene sorbitan monopalmitate, polyoxyethylene sorbitan monostearate, polyoxyethylene sorbitan monooleate, sorbitan monolaurate, ethylene glycol monolaurate, propylene glycol monolaurate, triglycerol monostearate, and a mixture thereof. DISPER-180, DISPER-182, DISPER-184, DISPER-190, DISPER-191, DISPER-192, DISPER-194 of BYK product or a mixture thereof is, but not limited to, preferably used among the commercialized products. The surfactant is preferably added in an amount of 0.01 parts by weight to 30 parts by weight based on 100 parts by weight of the suspension so as to uniformly mix the carbon nanostructure without entanglement. When the amount of the surfactant is less than 0.01 part by weight, the carbon nanostructure does not easily disperse in the solvent. When the amount of the surfactant is more than 30 parts by weight, it is inefficient that a lot of solvent is consumed to clean the residual surfactant after the carbon nanostructure is layered on the support.

According to the present disclosure, the carbon nanostructure may be mixed with 0.01 part by weight to 30 parts by weight based on 100 parts by weight of the suspension. When the amount of the carbon nanostructure is less than 0.01 part by weight, the porous membrane of the carbon nanostructure is not formed on the support. When the amount of the carbon nanostructure is more than 30 parts by weight, a membrane of the carbon nanostructure is formed on the support, but all of the pores are blocked.

According to the present disclosure, the first solvent may be selected from the group consisting of water, alcohol, polyhydric alcohol, glycol ethers, isophorone, and mixtures thereof.

According to the present disclosure, the binder may include a hardening resin comprising one or more selected from the group consisting of an epoxy-based resin, an acrylic-based resin, a phenol-based resin, a polyimide-based resin, a silicone-based resin, a ceramic-based resin, a polyurethane-based resin, a polyvinyl chloride polyvinyl acetate copolymer, a polyester resin, and an unsaturated polyester resin.

The binder may be a ceramic binder. The ceramic binder may be, but is not limited to, preferably used as RSN-0806 resin, RSN-0406 HS resin, RSN-0431 HS resin, RSN-0804 resin, RSN-0805 resin, RSN-0806 resin, RSN-0808 resin, RSN-0840 resin, RSN-0217 flake resin, RSN-0220 flake resin, RSN-0233 flake resin, RSN-0249 flake resin, or mixtures thereof, which are products manufactured by Dow Corning Co. on the market.

Further, the binder solution is required to be filtered through a porous membrane support having a carbon nanostructure layered thereon. Thus, the binder must be a substance having a viscosity low enough to be permeable to the membrane before hardening. Further, after hardening, the properties of the binder must remain, and the binder must be changed firmly. Therefore, the viscosity of the binder solution used is 50 cP to 100,000 cP. When the viscosity of the binder solution is less than 50 cP, it is relatively thinly layered on the carbon nanostructure layer and thus is not bonded to the support, and hardness thereof is also low. When the viscosity of the binder solution is more than 100,000 cP, the viscosity of the carbon nanostructure is too high to pass through the layered support, and thereby blocking all pores.

According to the present disclosure, the weight ratio of the polymer binder to the second solvent in the binder solution is 1 : 1 to 1 : 30. When the amount of the binder is greater than that of the second solvent upon preparation of the binder solution, the viscosity of the binder solution increases, and thus the binder cannot penetrate into the carbon nanostructure layer. On the other hand, when the amount of the binder is too lower than that of the second solvent, the binder solution can penetrate into the carbon nanostructure layer, but hardness thereof decreases or the pores thereof are formed nonuniformly upon calcining.

The pore size of the binder-coupled carbon nanostructure nanoporous membrane can be controlled depending on the size of the carbon nanostructure, the amount of the carbon nanostructure, or the ratio of the binder and the solvent. More specifically, the carbon nanostructure has a different diameter depending on kinds thereof. In spite of the same carbon nanostructure, since the carbon nanostructures can have different sizes thereof, the size of the pores can be controlled by controlling the size and type of the carbon nanostructure. By adjusting the amount of the carbon nanostructure added, the thickness of the carbon nanostructure bonded to the binder can be controlled to adjust size of the pores. In addition, the pore size can be controlled depending on the mixing ratio of the binder and the solvent. The function of the binder in the carbon nanostructure-binder bonded nanoporous membrane is to penetrate the network structure in which one or more carbon nanostructures are layered, attaching to the surfaces of the structures, and crosslinking them to each other to form a rigid network structure. The binder also bonds the support and the network structure of the carbon nanostructure firmly to form a nanoporous membrane on the support. In other words, when the binder attached on the surface of the carbon nanostructure and the support is calcined, the binder on the surface thereof is hardened to couple the carbon nanostructure with neighboring carbon nanostructures and thus to form a network structure.

According to the present disclosure, the second solvent may be selected from the group consisting of water, alcohol, polyhydric alcohol, glycol ethers, isophorone, and mixtures thereof.

According to the present disclosure, the calcining temperature may be 100°C to 500°C. When the calcining temperature is lower than 100°C, the desired hardness is not obtained, and thus the carbon nanostructure layer is desorbed. When the calcining temperature is higher than 500°C, the support is burnt or the binder membrane is cracked. When a ceramic binder is used, the calcining temperature is preferably 200°C to 300°C.

According to the present disclosure, the carbon nanostructure may be selected from a single wall carbon nanotube, a double wall carbon nanotube, a multi-wall carbon nanotube, a carbon nanohorn, a carbon nanofiber, or a mixture thereof.

According to the present disclosure, the porous support may be a porous filter made of polyethersulfone, polyethylene, polystyrene, polypropylene, paper, metal, cotton, glass fiber or carbon fiber. Further, the porous support preferably has a pore size of 0.1 µm to 10 µm. When the pore size is less than 0.1 µm, the solvent does not escape when the carbon nanostructure is layered on the porous membrane support, so that it is difficult to form the membrane. When the pore size is more than 10 µm, the carbon nanostructure in the dispersion solution passes all, and thus the carbon nanostructure layer cannot be formed on the carbon nanostructure layer.

According to the present disclosure, the porous filter may be a HEPA filter, a ULPA filter, a glass fiber filter, a glass powder sintering filter, a polymer nonwoven filter, a Teflon membrane filter, a sintered metal powder filter, or a metal wire weave filter.

In another aspect, the present disclosure relates to a binder-coupled carbon nanostructure nanoporous membrane prepared by the method as described above.

According to the present disclosure, the binder-coupled carbon nanostructure nanoporous membrane has a pore size of 0.1 nm to 500 nm. The pore size can be controlled depending the type, size or amount of the carbon nanostructure, and the ratio of the binder and the second solvent, as described above.

According to the present disclosure, the binder-coupled carbon nanostructure nanoporous membrane may be characterized in that the amount of the carbon nanostructure layered on the support is 0.05 mg/cm² to 10 mg/cm². When the amount of the carbon nanostructure layered on the support is 0.05 mg/cm² or less, the pores are not formed in the nano-size. When the amount of the carbon nanostructure layered on the support is 10 mg/cm² or more, since the size of the pores decreases, water permeability and air permeability are drastically reduced or the pores are completely clogged.

### EXAMPLES

Hereinafter, the present invention will be described in further detail with reference to examples.

### Example 1: Preparation of binder-coupled carbon nanostructure nanoporous membrane when the dilution ratio of the binder and the second solvent is 1 : 1

1.0 g of carbon nanotubes, 1 L of ultrapure water, and 1.0 g of a surfactant (product name: DISPER-192, manufactured by BYK) were put in a 2 L flask and subjected to dispersion treatment at 25°C to 30°C for 2 hours using ultrasonic waves. A HEPA filter paper having a pore size of 1 µm was cut into a 4 cm diameter circle and mounted on a filtration apparatus (Advantec KP-47H). Then, 100 ml of the dispersion liquid dispersed using the ultrasonic wave was put therein and then filtered. The surfactant and the fine residue were then washed with 500 ml of ethanol and 1000 ml of ultrapure water and dried in an oven set at a temperature of 80°C. The dried HEPA support was fixed again to the filtration apparatus, and 20 ml of a polymer binder, specifically, a ceramic binder (RSN805, manufactured by Dow Corning Co.) and toluene was mixed at a ratio of 1: 1, and the mixture was penetrated thereinto. The support was thermally hardened at 200°C for 1 hour.

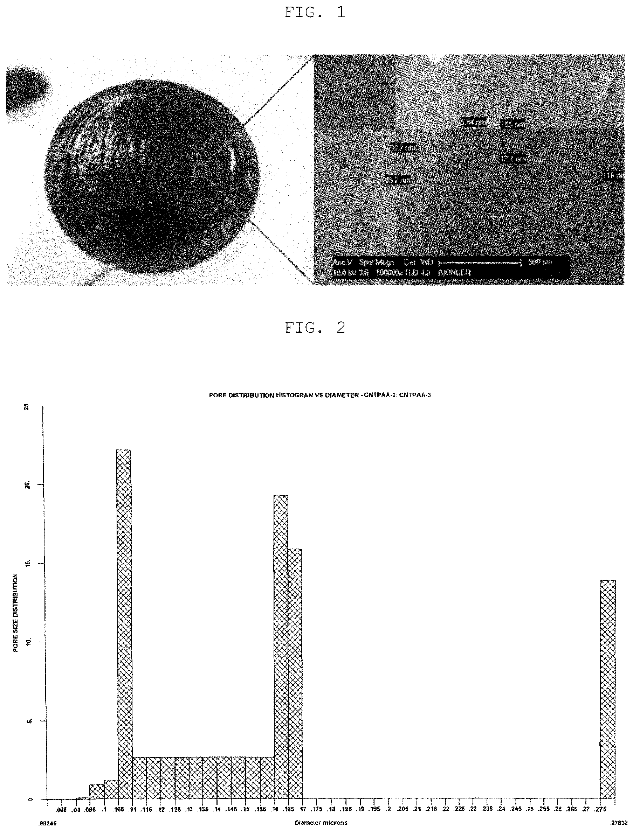

As shown in FIG. 1, the SEM analysis image of the binder-coupled carbon nanostructure nanoporous membrane shows that the porous membrane of the carbon nanotube was almost clogged by the binder, and new fine pores were formed. The prepared porous membrane was analyzed using an automated capillary flow porometer. As a result, the average pore size was 160 nm, which showed a pore size of a nanofilter region, and the pore distribution was 90 nm to 280 nm (*See* FIG. 2).

### Example 2: Preparation of binder-coupled carbon nanostructure nanoporous membrane when the dilution ratio of the binder and the second solvent is 1 : 10

The binder-coupled carbon nanostructure nanoporous membrane was prepared in the same scheme as in Example 1, except that the ratio of the ceramic binder (RSN805, manufactured by Dow Corning Co.) to toluene was 1 : 10.

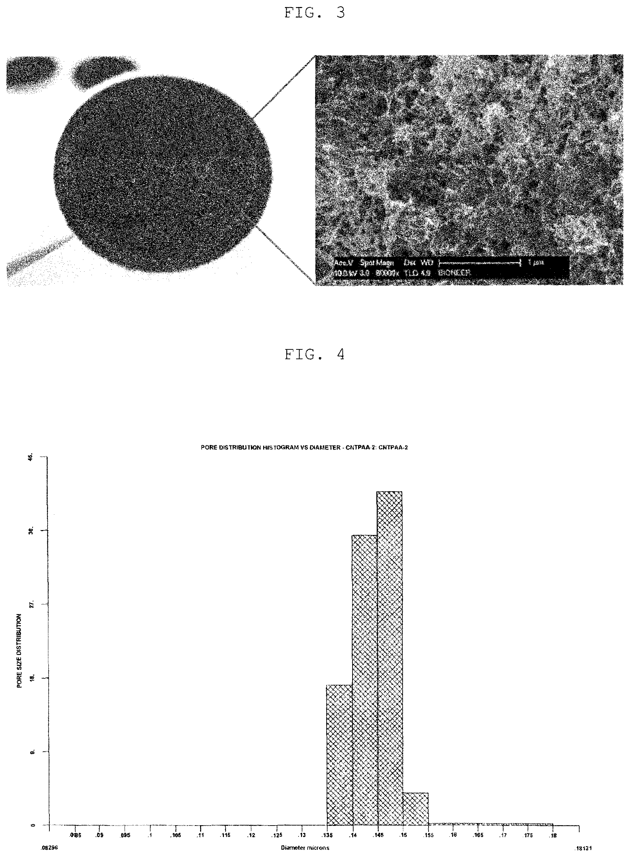

As shown in FIG. 3, the SEM analysis image of the binder-bonded carbon nanostructure nanoporous membrane showed that the pores of the carbon nanotubes were coated by the binder to form pores. As a result of analyzing the prepared porous membrane using an automated capillary flow porometer, the average pore size was 140 nm, which showed the pore size of the nanofilter region. The pore distribution was 130 nm to 150 nm, which was the narrowest so that it can be used as a separation membrane (See FIG. 4).

### Example 3: Preparation of binder-coupled carbon nanostructure nanoporous membrane when the dilution ratio of the binder and the second solvent is 1 : 20

The binder-coupled carbon nanostructure nanoporous membrane was prepared in the same scheme as in Example 1, except that the ratio of the ceramic binder (RSN805, manufactured by Dow Corning Co.) to toluene was 1 : 20.

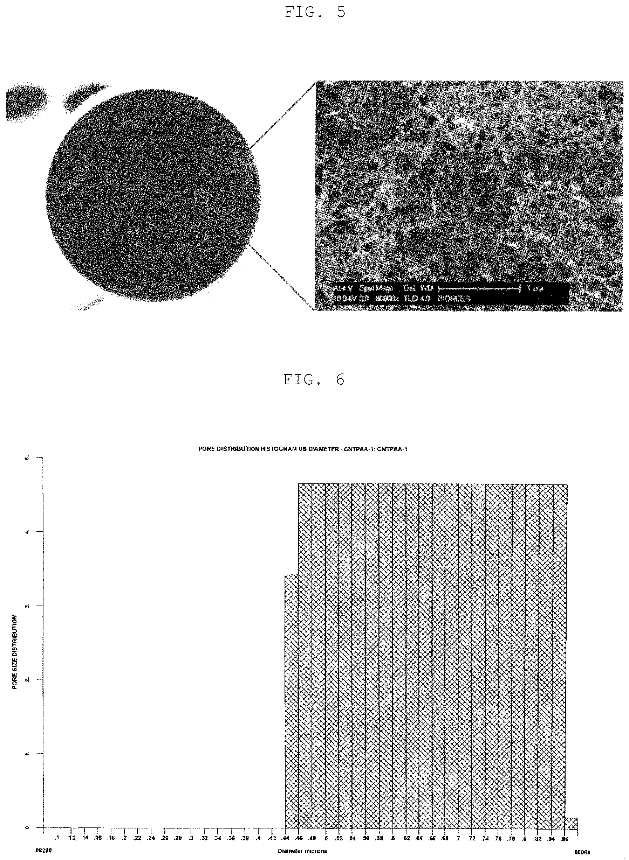

As shown in FIG. 5, the SEM analysis image of the binder-bonded carbon nanostructure nanoporous membrane showed that the pores of the carbon nanotubes were coated by the binder to form pores. As a result of analyzing the prepared porous membrane using an automated capillary flow porometer, the average pore size was 810 nm, which showed the pore size of the nanofilter region. The pore distribution was 450 nm to 860 nm (See FIG. 6).

### Comparative Example: carbon nanostructure porous membrane formed on support without polymer binder

Except for the polymer binder, the Comparative Example was carried out in the same scheme as in Example 1.

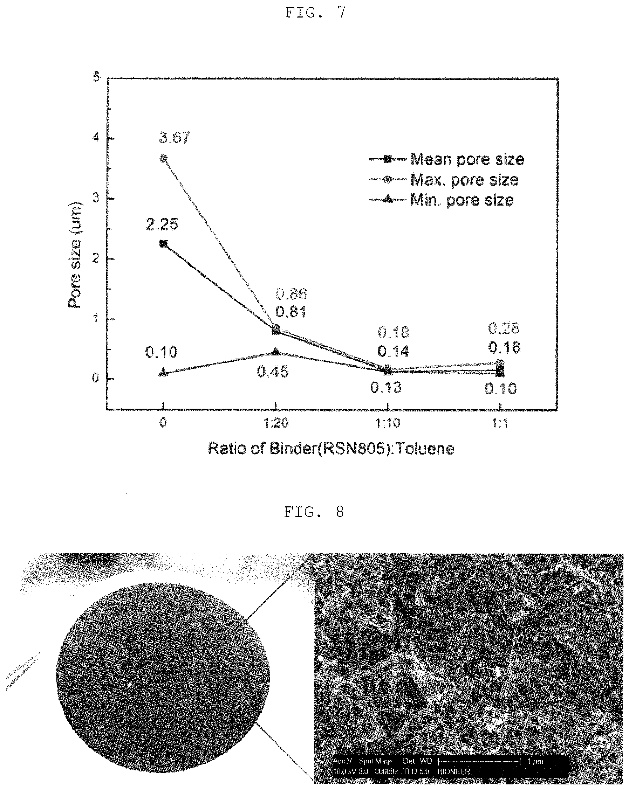

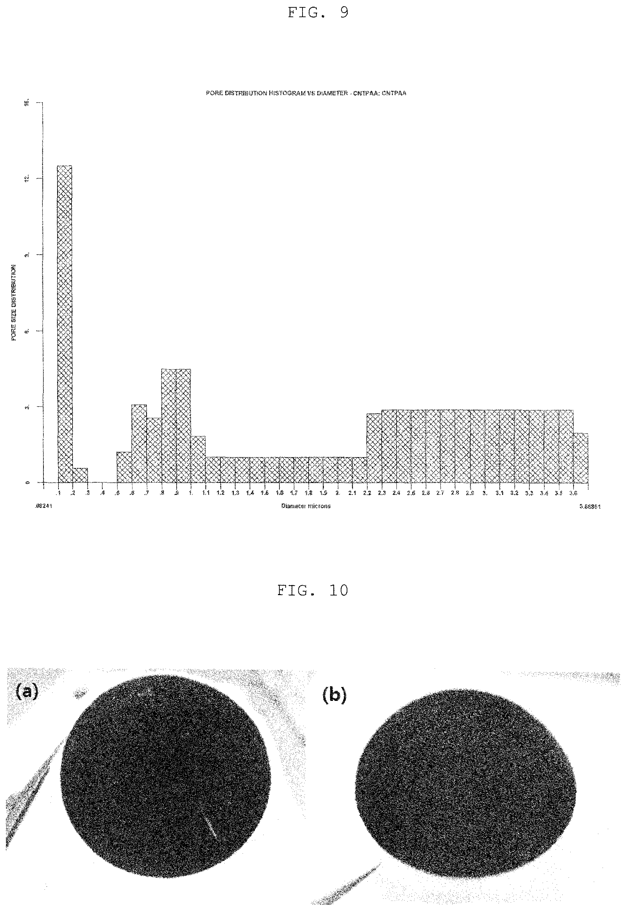

A carbon nanotube porous membrane was formed on a HEPA support in the same manner as in Example as described above, and then a SEM photograph was taken. As shown in FIG. 8, it was confirmed that the carbon nanotube porous membrane was formed on the support. The prepared porous membrane was analyzed using an automated capillary flow porometer. As a result, the average pore size was 2.25 µm, which showed a pore size of a microfilter region, but the pore distribution was very broad, which was in the range of 0.1 µm to 3.67 µm, so that it is difficult to be used as a separation membrane (*See* FIG. 9).

As illustrated in FIG. 7, it was found that the pore size and pore distribution of the binder-coupled carbon nanostructure nanoporous membrane were varied depending on the ratio of the ceramic binder and the toluene. The carbon nanostructure nanoporous membrane obtained by the binder solution without coating has a broad pore distribution with a maximum pore size of 3.67 µm and a minimum pore size of 0.10 µm and has an average pore size of 2.25 µm, which is a micro size. However, it can be found that the breadth of the minimum pore size and the maximum pore size are sharply reduced when the ceramic binder is mixed with an appropriate amount of a solvent and the diluted solution is coated. Here, it can be found that the smaller the amount of toluene mixed with the ceramic binder, the smaller the pore size. However, when the amount of toluene is too small, the viscosity of the ceramic binder becomes relatively high, and thus the pores formed by the carbon nanostructure may be clogged. Therefore, it is necessary to increase the dilution ratio of toluene. As a result, it was coated when the ratio of ceramic binder to toluene was 1 : 10, the pore size and pore distribution were the best.

### Experimental example: Experiment for coupling strength of binder-coupling carbon nanostructure nanoporous membrane

In order to test the binding strength between a support and a carbon nanotube porous membrane formed on the support, the carbon nanotube porous membrane and the binder-coupled carbon nanostructure nanoporous membrane were prepared by the same method, and water was permeated therethrough at a pressure of 3 bar to test the binding strength. As shown in FIG. 10A, it can be seen that the carbon nanotube porous membrane layer is separated from the support after water is permeated through the porous membrane without using a binder. Conversely, as shown in FIG. 10B, it can be conformed that the binder-coupled carbon nanostructure nanoporous membrane formed by passing through a binder and calcining the same is not desorbed even after permeation of water at a high pressure, and the binder is bonded to the support and the carbon nanotube porous membrane layer so that they are stably maintained.

### INDUSTRIAL APPLICABILITY

The nanoporous membrane according to the present disclosure not only maximizes the removal efficiency of nanoparticles in gas phase and the removal efficiency of nanomaterials in liquid phase but also has a long lifetime of nanoporous membrane and low maintenance cost due to excellent durability and mechanical properties. Therefore, it is useful for the production of, e.g., separation membranes for water treatment, fine dust removal membranes, field emission displays, hydrogen storage device assemblies, electrodes, super capacitors, electromagnetic wave shielding assemblies, and lightweight high strength applications.

## Claims

1. A method of preparing a binder-coupled carbon nanostructure nanoporous membrane, consisting of:
(a) preparing a suspension consisting of a carbon nanostructure, a first solvent and a surfactant, and then layering the suspension on a porous support thereby preparing a carbon nanostructure layer;
(b) washing the prepared carbon nanostructure layer with a solvent and drying the carbon nanostructure layer;
(c) preparing a binder solution by mixing a binder and a second solvent, and then preparing a complex porous membrane layer by infiltrating the binder solution into an upper portion of the carbon nanostructure layer; and
(d) heat treating the carbon nanostructure and the support layer by heating the layer, **characterized in that** viscosity of the binder solution is 50 to 100,000 cP; and weight ratio between the binder and the second solvent in the binder solution is 1 : 1 to 1 : 30,
wherein the binder penetrates the network structure,
the binder attaches to the surfaces of the structures,
the binder crosslinks them to each other to form a rigid network structure,
and the binder bonds the support and the network structure of the carbon nanostructure.

2. The method of claim 1, wherein the surfactant is selected from the group consisting of a nonionic surfactant, a cationic surfactant, an anionic surfactant and a mixture thereof, preferably the group consisting of cetyltrimethylammonium bromide, cetyltrimethylammonium chloride, sodium dodecyl sulfate, stearic acid, methyl glucoside, octyl glucoside, polyoxyethylene sorbitan monolaurate, polyoxyethylene sorbitan monopalmitate, polyoxyethylene sorbitan monostearate, polyoxyethylene sorbitan monooleate, sorbitan monolaurate, ethylene glycol monolaurate, propylene glycol monolaurate, triglycerol monostearate and a mixture thereof.

3. The method of claim 1, wherein the surfactant is added in an amount of 0.01 to 30 parts by weight based on 100 parts by weight of the suspension, and the carbon nanostructure is added in an amount of 0.01 to 30 parts by weight based on 100 parts by weight of the suspension.

4. The method of claim 1, wherein the first solvent and second solvent are selected from the group consisting of water, alcohol, polyhydric alcohol, glycol ethers, isophorone and mixtures thereof.

5. The method of claim 1, wherein the binder comprises at least one hardening resin selected from the group consisting of an epoxy-based resin, an acrylic-based resin, a phenol-based resin, a polyimide-based resin, a silicone-based resin, a ceramic-based resin, a polyurethane-based resin, a polyvinyl chloride polyvinyl acetate copolymer, a polyester resin, and an unsaturated polyester resin.

6. The method of claim 1, wherein the binder is a ceramic binder.

7. The method of claim 1, wherein the heat treating temperature is 100°C to 500°C.

8. The method of claim 1, wherein the carbon nanostructure is selected from a single wall carbon nanotube, a double wall carbon nanotube, a multi-wall carbon nanotube, a carbon nanohorn, a carbon nanofiber and a mixture thereof.

9. The method of claim 1, wherein the porous support is a porous filter made of polyethersulfone, polyethylene, polystyrene, polypropylene, paper, metal, cotton, glass fiber or carbon fiber, preferably a HEPA filter, a ULPA filter, a glass fiber filter, a glass powder sintering filter, a polymer nonwoven filter, a Teflon membrane filter, a sintered metal powder filter or a metal wire weave filter.

10. The method of claim 1, wherein the porous support has a pore size of 0.1 µm to 10 µm.

11. A binder-coupled carbon nanostructure nanoporous membrane prepared by the method of anyone of claim 1 to 10, which has a pore size of 0.1 nm to 500 nm, wherein the pore size is analyzed using an automated capillary flow porometer.

12. The binder-coupled carbon nanostructure nanoporous membrane of claim 11, wherein an amount of the carbon nanostructure layered on the support is 0.05 mg/cm² to 10 mg/cm² .

## Patentansprüche

1. Verfahren zur Herstellung einer bindemittelgekoppelten nanoporösen Kohlenstoffnanostrukturmembran, bestehend aus:
(a) Herstellen einer Suspension, bestehend aus einer Kohlenstoffnanostruktur, einem ersten Lösungsmittel und einem Tensid, und dann Schichten der Suspension auf einen porösen Träger, wodurch eine Kohlenstoffnanostrukturschicht hergestellt wird;
(b) Waschen der hergestellten Kohlenstoffnanostrukturschicht mit einem Lösungsmittel und Trocknen der Kohlenstoffnanostrukturschicht;
(c) Herstellen einer Bindemittellösung durch Mischen eines Bindemittels und eines zweiten Lösungsmittels, und dann Herstellen einer komplexen porösen Membranschicht durch Infiltrieren der Bindemittellösung in einen oberen Abschnitt der Kohlenstoffnanostrukturschicht; und
(d) Wärmebehandeln der Kohlenstoffnanostruktur und der Trägerschicht durch Erwärmen der Schicht, **dadurch gekennzeichnet, dass** die Viskosität der Bindemittellösung 50 bis 100.000 cP beträgt; und das Gewichtsverhältnis zwischen dem Bindemittel und dem zweiten Lösungsmittel in der Bindemittellösung 1 : 1 bis 1 : 30 beträgt,
wobei das Bindemittel die Netzwerkstruktur durchdringt,
das Bindemittel an den Oberflächen der Strukturen haftet,
das Bindemittel sie miteinander vernetzt, um eine starre Netzwerkstruktur zu bilden,
und das Bindemittel den Träger und die Netzwerkstruktur der Kohlenstoffnanostruktur bindet.

2. Verfahren nach Anspruch 1, wobei das Tensid ausgewählt ist aus der Gruppe, bestehend aus einem nichtionischen Tensid, einem kationischen Tensid, einem anionischen Tensid und einer Mischung davon, vorzugsweise der Gruppe, bestehend aus Cetyltrimethylammoniumbromid, Cetyltrimethylammoniumchlorid, Natriumdodecylsulfat, Stearinsäure, Methylglucosid, Octylglucosid, Polyoxyethylensorbitanmonolaurat, Polyoxyethylensorbitanmonopalmitat, Polyoxyethylensorbitanmonostearat, Polyoxyethylensorbitanmonooleat, Sorbitanmonolaurat, Ethylenglycolmonolaurat, Propylenglycolmonolaurat, Triglycerolmonostearat und einer Mischung davon.

3. Verfahren nach Anspruch 1, wobei das Tensid in einer Menge von 0,01 bis 30 Gewichtsteilen, bezogen auf 100 Gewichtsteile der Suspension, zugegeben wird und die Kohlenstoffnanostruktur in einer Menge von 0,01 bis 30 Gewichtsteilen, bezogen auf 100 Gewichtsteile der Suspension, zugegeben wird.

4. Verfahren nach Anspruch 1, wobei das erste Lösungsmittel und das zweite Lösungsmittel ausgewählt sind aus der Gruppe, bestehend aus Wasser, Alkohol, mehrwertigem Alkohol, Glycolethern, Isophoron und Mischungen davon.

5. Verfahren nach Anspruch 1, wobei das Bindemittel mindestens ein Härtungsharz umfasst, ausgewählt aus der Gruppe, bestehend aus einem Harz auf Epoxidbasis, einem Harz auf Acrylbasis, einem Harz auf Phenolbasis, einem Harz auf Polyimidbasis, einem Harz auf Silikonbasis, einem Harz auf Keramikbasis, einem Harz auf Polyurethanbasis, einem Polyvinylchlorid-Polyvinylacetat-Copolymer, einem Polyesterharz und einem ungesättigten Polyesterharz.

6. Verfahren nach Anspruch 1, wobei das Bindemittel ein keramisches Bindemittel ist.

7. Verfahren nach Anspruch 1, wobei die Wärmebehandlungstemperatur 100 °C bis 500 °C beträgt.

8. Verfahren nach Anspruch 1, wobei die Kohlenstoffnanostruktur ausgewählt ist aus einer einwandigen Kohlenstoffnanoröhre, einer doppelwandigen Kohlenstoffnanoröhre, einer mehrwandigen Kohlenstoffnanoröhre, einem Kohlenstoffnanohorn, einer Kohlenstoffnanofaser und einer Mischung davon.

9. Verfahren nach Anspruch 1, wobei der poröse Träger ein poröser Filter aus Polyethersulfon, Polyethylen, Polystyrol, Polypropylen, Papier, Metall, Baumwolle, Glasfaser oder Kohlenstofffaser ist, vorzugsweise ein HEPA-Filter, ein ULPA-Filter, ein Glasfaserfilter, ein Glaspulversinterfilter, ein Polymervliesfilter, ein Teflonmembranfilter, ein gesinterter Metallpulverfilter oder ein Metalldrahtgewebefilter.

10. Verfahren nach Anspruch 1, wobei der poröse Träger eine Porengröße von 0,1 µm bis 10 µm aufweist.

11. Bindemittelgekoppelte nanoporöse Kohlenstoffnanostrukturmembran, hergestellt durch das Verfahren nach einem der Ansprüche 1 bis 10, die eine Porengröße von 0,1 nm bis 500 nm aufweist, wobei die Porengröße unter Verwendung eines automatisierten Kapillardurchflussporometers analysiert wird.

12. Bindemittelgekoppelte nanoporöse Kohlenstoffnanostrukturmembran nach Anspruch 11, wobei eine Menge der auf den Träger geschichteten Kohlenstoffnanostruktur 0,05 mg/cm² bis 10 mg/cm² beträgt.

## Revendications

1. Procédé de préparation d'une membrane nanoporeuse à nanostructure de carbone couplée à un liant, consistant à :
(a) préparer une suspension composée d'une nanostructure de carbone, d'un premier solvant et d'un tensioactif, puis déposer la suspension sur un support poreux afin de préparer une couche de nanostructure de carbone ;
(b) laver la couche de nanostructure de carbone préparée avec un solvant et sécher la couche de nanostructure de carbone ;
(c) préparer une solution de liant en mélangeant un liant et un deuxième solvant, puis préparer une couche de membrane poreuse complexe en infiltrant la solution de liant dans une partie supérieure de la couche de nanostructure de carbone ; et
(d) le traitement thermique de la nanostructure de carbone et de la couche de support en chauffant la couche, **caractérisé en ce que** la viscosité de la solution de liant est comprise entre 50 et 100 000 cP ; et le rapport pondéral entre le liant et le deuxième solvant dans la solution de liant est compris entre 1:1 et 1:30,
dans lequel le liant pénètre dans la structure réticulaire,
le liant se fixe aux surfaces des structures,
le liant les réticule entre elles pour former une structure réticulaire rigide,
et le liant lie le support et la structure réticulaire de la nanostructure de carbone.

2. Procédé selon la revendication 1, dans lequel le tensioactif est choisi dans le groupe constitué d'un tensioactif non ionique, un tensioactif cationique, un tensioactif anionique et un mélange de ceux-ci, de préférence le groupe constitué du bromure de cétyltriméthylammonium, du chlorure de cétyltriméthylammonium, du dodécylsulfate de sodium, de l'acide stéarique, du méthyl glucoside, de l'octylglucoside, du monolaurate de polyoxyéthylène sorbitanemonolaurate de polyoxyéthylène sorbitane, le monopalmitate de polyoxyéthylène sorbitane, le monostéarate de polyoxyéthylène sorbitane, le monooléate de polyoxyéthylène sorbitane, le monolaurate de sorbitane, le monolaurate d'éthylène glycol, le monolaurate de propylène glycol, le monostéarate de triglycérol et un mélange de ceux-ci.

3. Procédé selon la revendication 1, dans lequel le tensioactif est ajouté en une quantité de 0,01 à 30 parties en poids pour 100 parties en poids de la suspension, et la nanostructure de carbone est ajoutée en une quantité de 0,01 à 30 parties en poids pour 100 parties en poids de la suspension.

4. Procédé selon la revendication 1, dans lequel le premier solvant et le deuxième solvant sont choisis dans le groupe constitué par l'eau, l'alcool, les alcools polyhydriques, les éthers de glycol, l'isophorone et leurs mélanges.

5. Procédé selon la revendication 1, dans lequel le liant comprend au moins une résine durcissante choisie dans le groupe constitué par une résine à base d'époxy, une résine à base d'acrylique, une résine à base de phénol, une résine à base de polyimide, une résine à base de silicone, une résine à base de céramique, une résine à base de polyuréthane, un copolymère de chlorure de polyvinyle et d'acétate de polyvinyle, une résine polyester et une résine polyester insaturée.

6. Procédé selon la revendication 1, dans lequel le liant est un liant céramique.

7. Procédé selon la revendication 1, dans lequel la température de traitement thermique est comprise entre 100 °C et 500 °C.

8. Procédé selon la revendication 1, dans lequel la nanostructure de carbone est choisie parmi un nanotube de carbone à paroi simple, un nanotube de carbone à double paroi, un nanotube de carbone à parois multiples, une nanocorne de carbone, une nanofibre de carbone et un mélange de ceux-ci.

9. Procédé selon la revendication 1, dans lequel le support poreux est un filtre poreux en polyéthersulfone, polyéthylène, polystyrène, polypropylène, papier, métal, coton, fibre de verre ou fibre de carbone, de préférence un filtre HEPA, un filtre ULPA, un filtre en fibre de verre, un filtre en poudre de verre fritté, un filtre non tissé en polymère, un filtre à membrane en Téflon, un filtre en poudre métallique fritté ou un filtre en fil métallique tissé.

10. Procédé selon la revendication 1, dans lequel le support poreux a une taille de pores de 0,1 µm à 10 µm.

11. Membrane nanoporeuse à nanostructure de carbone couplée à un liant préparée par le procédé de l'une des revendications 1 à 10, qui a une taille de pores de 0,1 nm à 500 nm, dans laquelle la taille des pores est analysée à l'aide d'un poromètre à écoulement capillaire automatisé.

12. Membrane nanoporeuse à nanostructure de carbone couplée à un liant selon la revendication 11, dans laquelle la quantité de nanostructure de carbone déposée sur le support est de 0,05 mg/cm² à 10 mg/cm².
